# EUROPÄISCHE PATENTANMELDUNG

(11) **EP 4 644 691 A1**
(43) Veröffentlichungstag der Anmeldung: **05.11.2025**
(21) Anmeldenummer: 24173253.6
(22) Anmeldetag: 30.04.2024
(51) Int. Cl.: F03D 15/00, F03D 15/10

(54) **ANTRIEBSSTRANG FÜR EINE WINDKRAFTANLAGE**

(71) Anmelder: Flender GmbH, 46395 Bocholt (DE)
(72) Erfinder: KÖNIG, Christian, 46395 Bocholt (DE); TRIVIC, Daniel, 46395 Bocholt (DE); TÜSHAUS, Tino, 46395 Bocholt (DE)
(74) Vertreter: Michalski Hüttermann & Partner Patentanwälte mbB

(57) **Zusammenfassung**

Es ist ein Antriebsstrang (14) für eine Windkraftanlage (10) vorgesehen mit einer Ausgangswelle (44) zur Übertragung eines von einem Windrotor (12) stammenden windkraftgenerierten Drehmoments, einem Rotor (46), einem von dem Rotor (46) nach radial innen abstehenden Rotorträger (52) und einer mit dem Rotorträger (52) und der Ausgangswelle (44) drehfest verbundenen Zwischenwelle (50), wobei die Zwischenwelle (50) mit der Ausgangswelle (44) verpresst ist und/oder die Zwischenwelle (50) mit der Ausgangswelle (44) über eine radial verlaufende Stiftverbindung (68) befestigt ist, wobei ein Stift (70) der Stiftverbindung (68) in radialer Richtung vollständig in der Zwischenwelle (50) und der Ausgangswelle (44) versenkt aufgenommen ist. Durch das Verpressen beziehungsweise das Verstiften der Zwischenwelle (50) mit der Ausgangswelle (44) ist nicht nur die Montagefreundlichkeit des Antriebsstrangs (14) verbessert, sondern auch eine Anpassung der Geometrie der Zwischenwelle (50) in radialer Richtung über einen größeren Bereich ermöglicht, um auftretende Schwingungen im Drehmomentfluss des Antriebsstrangs (14) stärker zu reduzieren.

## Beschreibung

Die Erfindung betrifft einen Antriebsstrang für eine Windkraftanlage, mit dessen Hilfe aus einem von einem Windrotor stammenden windkraftgenerierten Drehmoment elektrische Energie industriell erzeugt werden kann. Die Erfindung betrifft ferner eine Baureihe derartiger Antriebsstränge sowie ein Datenagglomerat zur additiven Fertigung und/oder Simulation derartiger Antriebsstränge.

Aus US 2010/0133854 A1 ist ein Antriebsstrang für eine Windkraftanlage bekannt, bei dem eine Ausgangswelle eines Windgetriebes über eine Steckverzahnung mit einer radial außerhalb zu der Ausgangswelle vorgesehenen Zwischenwelle drehmomentübertragend verbunden ist, wobei die Zwischenwelle über ein an einer nach radial außen weisenden Oberfläche eines feststehenden Gehäuseteils vorgesehenen Rotorlager gelagert ist und radial außerhalb zu dem Rotorlager über eine Flanschverbindung mit einem Rotorträger eines Rotors für einen zur Stromerzeugung vorgesehenen Generator verbunden ist.

Es besteht ein ständiges Bedürfnis einen Antriebsstrang für eine Windkraftanlage leicht montieren und demontieren zu können und auftretende Schwingungen zu reduzieren.

Es ist die Aufgabe der Erfindung Maßnahmen aufzuzeigen, die einen montagefreundlichen und schwingungsarmen Antriebsstrang für eine industrielle Windkraftanlage ermöglichen.

Die Lösung der Aufgabe erfolgt durch einen Antriebsstrang mit den Merkmalen des Anspruchs 1, einen Antriebsstrang mit den Merkmalen des Anspruchs 4, einer Baureihe mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft einen Antriebsstrang für eine Windkraftanlage, mit einer Ausgangswelle zur Übertragung eines von einem Windrotor stammenden windkraftgenerierten Drehmoments, einem Rotor zur Erzeugung elektrischer Energie aus dem windkraftgenerierten Drehmoment bei einem Zusammenwirken mit einem Stator eines Generators, einem von dem Rotor nach radial innen abstehenden Rotorträger und einer mit dem Rotorträger und der Ausgangswelle drehfest verbundenen Zwischenwelle, wobei die Zwischenwelle mit der Ausgangswelle verpresst ist.

Es ist möglich die Ausgangswelle und die Zwischenwelle unabhängig voneinander zu fertigen und nachfolgend mit Hilfe der, insbesondere unlösbaren, Pressverbindung zu einem vormontierten gemeinsamen Unterzusammenbau zusammenzusetzen. Da ein Anpassen der Relativlage in Umfangsrichtung zwischen der Ausgangswelle und der Zwischenwelle, um eine Verbindung mit Hilfe einer Steckverzahnung oder Flanschverbindung herbeizuführen, eingespart ist, kann die Montage und die Demontage des Antriebsstrangs vereinfacht sein. Insbesondere ist es möglich, dass die Ausgangswelle und die Zwischenwelle sich in radialer Richtung betrachtet über eine signifikante axialer Erstreckung überdecken. Dadurch kann die Ausgangswelle in axialer Richtung aus einem Gehäuseteil, insbesondere einem Getriebegehäuse eines Windgetriebes, in ein Innenvolumen des Generators hinein abstehen, wobei ein generatorseitiges Abstehen der Ausgangswelle über eine Verbindungsstelle mit dem Rotorträger hinaus durch die Zwischenwelle von der Pressverbindung mit der Ausgangswelle ausgehend wieder in entgegengesetzter axialer Richtung überbrückt werden kann. Der mit Hilfe der Zwischenwelle in das Innenvolumen des Generators hinein abstehende Teil der Ausgangswelle kann prinzipiell ein freies Ende eines schwingungsfähigen Systems darstellen, das vorzugsweise in der Art eines Schwingungstilgers, insbesondere hörbare, Schwingungen reduzieren und/oder dämpfen kann.

Es wurde erkannt, dass das schwingungsdämpfende Verhalten der aus der Ausgangswelle und der Zwischenwelle zusammengesetzten Baueinheit leicht durch eine Variation der Dimensionierung der Zwischenwelle an unterschiedliche Schwingungssituationen, die sich bei unterschiedlich ausgelegten Antriebssträngen ergeben können, angepasst werden kann. Da bei der Verbindung der Ausgangswelle mit der Zwischenwelle aufgrund des Pressverbunds eine Steckverzahnung als Verbindungstechnik vermieden werden kann, ist eine Schmierung der Verbindung nicht erforderlich, wodurch eine entsprechende Schmiermittelversorgung an der Verbindungsstelle eingespart werden kann. Zudem ist durch den Pressverbund im Vergleich zu einer Steckverzahnung der Innendurchmesser der Zwischenwelle nicht durch die Ausbildung abstehender Zähne der Steckverzahnung limitiert, so dass bei im Übrigen gleichen Geometrien der Innendurchmesser der Zwischenwelle geringer dimensioniert werden kann. Ebenso ist durch die Verbindung der Ausgangswelle mit der Zwischenwelle mit Hilfe des Pressverbunds eine nach radial außen abstehende Flanschverbindung eingespart, so dass genügend zugänglicher Bauraum geschaffen ist, um bei im Übrigen gleichen Geometrien den Außendurchmesser der Zwischenwelle größer zu dimensionieren. Der Außendurchmesser der Zwischenwelle ist durch den Wegfall der Flanschverbindung nicht mehr durch die Montierbarkeit der Verbindungsmittel der Flanschverbindung limitiert, sondern allenfalls noch durch die Verbindungstechnik der Zwischenwelle mit dem Rotorträger. Vorzugsweise sind sämtliche vorgesehenen mindestens eine drehmomentübertragende Verbindung der Ausgangswelle mit der Zwischenwelle verschieden von einer Verzahnung und verschieden von einer Flanschverbindung ausgestaltet.

Die mit Hilfe des Pressverbands bereitgestellten konstruktiven Freiheiten bei der Dimensionierung des Innendurchmessers, des Außendurchmessers und/oder der radialen Wandstärke der insbesondere als Hohlwelle ausgestalteten Zwischenwelle erlauben eine schwingungstechnische Optimierung der Zwischenwelle an die zu erwartenden Schwingungen innerhalb des Drehmomentflusses des Antriebsstrangs. Beispielsweise kann durch eine Vergrößerung der radialen Wandstärke der Zwischenwelle die Steifigkeit der Zwischenwelle vergrößert werden und eine Schwingungsdämpfung beziehungsweise Schwingungstilgung in einem niedrigeren Frequenzbereich erreicht werden. Insbesondere da der Bauraum in axialer Richtung für den abstehenden Teil der aus der Ausgangswelle und der Zwischenwelle zusammengesetzten Baueinheit durch die Abmessungen des Generators begrenzt ist, eröffnet die mit Hilfe des Pressverbunds zwischen der Ausgangswelle und der Zwischenwelle eröffneten konstruktiven Freiheiten in der geometrischen Ausgestaltung der Zwischenwelle eine verbesserte Schwingungsdämpfung. Durch das Verpressen der Zwischenwelle mit der Ausgangswelle ist nicht nur die Montagefreundlichkeit des Antriebsstrangs verbessert, sondern auch eine Anpassung der Geometrie der Zwischenwelle in radialer Richtung über einen größeren Bereich ermöglicht, um auftretende Schwingungen im Drehmomentfluss des Antriebsstrangs stärker zu reduzieren.

Der Antriebsstrang kann insbesondere den Windrotor aufweisen, der von angreifendem Wind in Rotation versetzt werden kann und dadurch unmittelbar oder mittelbar, insbesondere über ein zwischengeschaltetes Windgetriebe, den Generator antreiben kann, um elektrische Energie zu erzeugen. Der Antriebsstrang ist hierbei insbesondere zur industriellen Stromerzeugung in der Windkraftanlage dimensioniert.

Die Windkraftanlage ist insbesondere als eine industrielle Windkraftanlage ausgestaltet. Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Der Windrotor kann mit einer zentralen Nabe verbundene Windblätter aufweisen, an denen ein Wind angreifen kann, um den Windrotor in Rotation zu versetzen und das so erzeugte windkraftgenerierte Drehmoment in den Antriebsstrang einzuleiten. Vorzugsweis kann ein Anstellwinkel der Windblätter variiert werden, um die Drehzahl des Windrotors an die vorherrschende Windstärke anzupassen und/oder bei zu hohen Windstärken eine Beschädigung des Antriebsstrangs zu vermeiden.

Der Generator kann als eine elektrische Maschine ausgestaltet sein, die für die Erzeugung elektrischer Energie optimiert ist. Hierzu kann ein, insbesondere Elektromagneten aufweisender Stator vorgesehen sein, der mit dem, insbesondere Permanentmagneten aufweisenden, Rotor zusammenwirken kann. Die elektrische Maschine des Generators ist insbesondere als Innenläufer ausgestaltet, wobei eine alternative Ausgestaltung als Außenläufer ebenfalls grundsätzlich möglich ist. Der Stator kann bewegungsfest mit einem Generatorgehäuse befestigt sein, während der Rotor relativ drehbar zum Stator ausgeführt ist.

Der Rotorträger ist mit dem, insbesondere Permanentmagneten aufweisenden, Rotor drehfest verbunden. In der Regel weist der Rotor eine im Wesentlichen zylindrische Ausgestaltung auf, während der Rotorträger eher auf einer, gegebenenfalls abgekröpft verlaufenden, Scheibe basiert. Insbesondere kann der Rotorträger unmittelbar oder mittelbar gelagert sein, wobei vorzugsweise der mit dem Rotorträger befestigte Rotor koaxial zum Stator positioniert ist.

Die Ausgangswelle ist zum Ausleiten des windkraftgenerierten Drehmoments in den Generator vorgesehen. Bei einem direkt angetriebenen Generator kann die Ausgangswelle die gleiche Drehzahl wie der Windrotor aufweisen und mit der Windrotorwelle identisch sein oder mit der Windrotorwelle drehfest verbunden sein. Wenn zwischen dem Windrotor und dem Generator ein Windgetriebe zur Wandlung des windkraftgenerierten Drehmoments, vorzugsweise ins Schnelle, vorgesehen ist, ist die Ausgangswelle durch die ausgangsseitige Welle des Windgetriebes ausgebildet. Die Ausgangswelle kann vorzugsweise in ein Innenvolumen des Generators hineinragen, so dass ein Teil der Ausgangswelle sowie der Rotor und/oder der Stator des Generators in einem gemeinsamen Axialbereich vorgesehen sind. Die Ausgangswelle ist vorzugsweise als Hohlwelle ausgestaltet, so dass radial innerhalb der Ausgangswelle elektrische und/oder hydraulische Versorgungsleitungen, insbesondere über ein radial innerhalb des Ausgangswelle verlaufendes Pitchrohr, bis zum Windrotor geführt werden können.

Die Zwischenwelle kann in einem axialen Endbereich der Ausgangswelle mit der Ausgangswelle befestigt sein. Insbesondere ragt die Ausgangswelle generatorseitig, also in Richtung des Drehmomentflusses in der Ausgangswelle, nicht aus der als Hohlwelle ausgestalteten Zwischenwelle hinaus. Die Zwischenwelle kann zwischen der Befestigungsstelle mit der Ausgangswelle und der Befestigungsstelle mit dem Rotorträger im Wesentlichen koaxial zur Ausgangswelle radial außerhalb der Ausgangswelle verlaufen. Vorzugsweise ist in radialer Richtung zwischen der Zwischenwelle und der Ausgangswelle ein ringförmiger Radialspalt freigehalten, dessen Dimensionierung in radialer Richtung groß genug ist, dass bei einem Schwingen der Ausgangswelle und der Zwischenwelle und einem dabei stattfindenden elastischen Verformen ein radiales Anschlagen vermieden ist.

Das Verpressen der Zwischenwelle mit der Ausgangswelle führt zu einer Pressverbindung, insbesondere Pressverbund, wodurch eine reibschlüssige Verbindung zwischen der Zwischenwelle und der Ausgangswelle darstellt wird. Der Pressverbund kann derart dimensioniert sein, dass ein im Pressverbund zu erwartendes maximales windkraftgeneriertes Drehmoment sicher übertragen werden kann. Zur Herstellung des Pressverbunds kann eine bewusste Presspassung mit einem radialen Übermaß zwischen der Zwischenwelle und der Ausganswelle vorgesehen sein, wobei beispielsweise durch ein Aufschrumpfen ("Querpressverband") und/oder ein axiales Eintreiben ("Längspressverband") der Pressverbund erzeugt werden kann.

Insbesondere ist die Zwischenwelle über einen radial geführten Passsitz, insbesondere eine Schrumpfverbindung und/oder einen zylindrischen oder kegeligen Pressverband, mit der Ausgangswelle verpresst. Für die Herstellung Schrumpfverbindung kann die Zwischenwelle erwärmt und/oder die Ausgangswelle gekühlt werden, was sich insbesondere bei eher dünnwandigen Wellen anbietet. Insbesondere wenn die Wandstärken in radialer Richtung dicker ausgeführt sind, kann ein zylindrischer oder kegeliger Längspressverband vorgesehen werden, für dessen Erzeugung die Bereitstellung mechanischer Kräfte ausreichend sein kann.

Vorzugsweise ist die Zwischenwelle mit der Ausgangswelle über eine radial ausgerichtete Stiftverbindung befestigt, wobei insbesondere mindestens ein Stift der Stiftverbindung in radialer Richtung vollständig in der Zwischenwelle und der Ausgangswelle versenkt aufgenommen ist. Durch die Stiftverbindung kann der Pressverbund zwischen der Zwischenwelle und der Ausgangswelle entlastet werden und zumindest ein Teil des zu übertragenen Drehmoments auch an dem Pressverbund vorbei über die mindestens eine Stiftverbindung übertragen werden. Während der Pressverbund eine reibschlüssige Verbindung darstellt, kann die Stiftverbindung im Wesentlichen eine formschlüssige Verbindung darstellen. Der Stift der Stiftverbindung ist insbesondere im Wesentlichen in radialer Richtung ausgerichtet. Vorzugsweise ist der Stift in eine korrespondierende Öffnung in der Zwischenwelle und/oder in der Ausgangswelle eingepresst. Insbesondere ist der Stift zumindest soweit in der Stiftverbindung reibschlüssig festgehalten, dass ein Lösen der Stiftverbindung bei den zu erwartenden Drehzahlen und den damit verbundenen Fliehkräften nicht zu erwarten ist. Insbesondere wenn der Stift vollständig in der Zwischenwelle und in der Ausgangswelle versenkt aufgenommen ist, kann ein Abstehen des Stifts von der Zwischenwelle nach radial außen vermieden werden, so dass die durch das Verpressen der Zwischenwelle mit der Ausgangswelle gewonnen konstruktiven Freiheiten nicht beeinträchtigt werden. Durch die Stiftverbindung kann die Drehmomentübertragung von der Ausgangswelle an die Zwischenwelle verbessert werden, ohne dass hierbei die schwingungstechnische Optimierung der Zwischenwelle zur Reduktion auftretender Schwingungen beeinträchtigt wird.

Ein weiterer unabhängiger Aspekt der Erfindung betrifft einen Antriebsstrang für eine Windkraftanlage, mit einer Ausgangswelle zur Übertragung eines von einem Windrotor stammenden windkraftgenerierten Drehmoments, einem Rotor zur Erzeugung elektrischer Energie aus dem windkraftgenerierten Drehmoment bei einem Zusammenwirken mit einem Stator eines Generators, einem von dem Rotor nach radial innen abstehenden Rotorträger und einer mit dem Rotorträger und der Ausgangswelle drehfest verbundenen Zwischenwelle, wobei die Zwischenwelle mit der Ausgangswelle über eine radial ausgerichtete Stiftverbindung befestigt ist, wobei mindestens ein Stift der Stiftverbindung in radialer Richtung vollständig in der Zwischenwelle und der Ausgangswelle versenkt aufgenommen ist.

Die Stiftverbindung kann insbesondere alternativ zu dem vorstehend beschriebenen Pressverbund zwischen der Zwischenwelle und der Ausgangswelle vorgesehen sein. Das heißt, wenn die Stiftverbindung zwischen der Zwischenwelle und der Ausgangswelle vorgesehen ist, ist es auch möglich, dass die drehmomentübertragende Verbindung der Zwischenwelle mit der Ausgangswelle von einem Verpressen verschieden ausgestaltet ist. Da bei der Verbindung der Ausgangswelle mit der Zwischenwelle aufgrund der Stiftverbindung eine Steckverzahnung als Verbindungstechnik vermieden werden kann, ist der Innendurchmesser der Zwischenwelle nicht durch die Ausbildung abstehender Zähne der Steckverzahnung limitiert, so dass bei im Übrigen gleichen Geometrien der Innendurchmesser der Zwischenwelle geringer dimensioniert werden kann. Ebenso ist durch die Verbindung der Ausgangswelle mit der Zwischenwelle mit Hilfe der Stiftverbindung eine nach radial außen abstehende Flanschverbindung eingespart, so dass genügend zugänglicher Bauraum geschaffen ist, um bei im Übrigen gleichen Geometrien den Außendurchmesser der Zwischenwelle größer zu dimensionieren. Der Außendurchmesser der Zwischenwelle ist durch den Wegfall der Flanschverbindung nicht mehr durch die Montierbarkeit der Verbindungsmittel der Flanschverbindung limitiert, sondern allenfalls noch durch die Verbindungstechnik der Zwischenwelle mit dem Rotorträger. Vorzugsweise sind sämtliche vorgesehenen mindestens eine drehmomentübertragende Verbindung der Ausgangswelle mit der Zwischenwelle verschieden von einer Verzahnung und verschieden von einer Flanschverbindung ausgestaltet. Durch die versenkte Stiftverbindung ist nicht nur die Montagefreundlichkeit des Antriebsstrangs verbessert, sondern auch eine Anpassung der Geometrie der Zwischenwelle in radialer Richtung über einen größeren Bereich ermöglicht, um auftretende Schwingungen im Drehmomentfluss des Antriebsstrangs stärker zu reduzieren.

Nachfolgend beschriebene Ausgestaltungen der Erfindung können grundsätzlich für alle vorstehend beschriebene Aspekte der Erfindung eine Weiterbildung darstellen.

Besonders bevorzugt ist die Stiftverbindung radial außen und/oder radial innen von einer aufgesteckten Rückhaltehülse radial gesichert, wobei insbesondere die Rückhaltehülse axial gesichert ist. Durch die in axialer Richtung aufgesteckte Rückhaltehülse ist ein Lösen der Rückhaltehülse unter Fliehkrafteinfluss vermieden. Die Rückhaltehülse kann in einem gemeinsamen Axialbereich mit dem Stift der Stiftverbindung positioniert sein, so dass selbst bei einem sich unter Fliehkrafteinfluss in radialer Richtung lösenden Stift dieser Stift an einer radialen Innenseite der Rückhaltehülse anschlägt und zurückgehalten wird. Die mit Hilfe der Stiftverbindung erreichte formschlüssige Drehmomentübertragung bleibt daher auch bei hohen Drehzahlen erhalten. Für die axiale Sicherung der Rückhaltehülse kann die Rückhaltehülse insbesondere reibschlüssig, beispielsweise mit Hilfe einer Presspassung oder Übergangspassung, mit der Zwischenwelle verbunden sein. Zudem ist es möglich die Rückhaltehülse mit der Zwischenwelle zu verkleben, zu verlöten und/oder zu verschweißen.

Eine axiale Verlagerung der Rückhaltehülse kann aber auch durch formschlüssige axiale Anschläge vermieden werden, beispielsweise durch einen Wellenabsatz und/oder mindestens einen in einer Nut der Zwischenwelle eingesetzten Sicherungsring. Insbesondere ist die Stiftverbindung sowohl radial außen als auch radial innen entweder durch jeweils eine separate Rückhaltehülse oder eine gemeinsame Rückhaltehülse gesichert.

Insbesondere weist die Stiftverbindung einen Stift mit einem in radialer Richtung anschlagbaren Kopf auf. Wenn der Stift von radial außen eingesetzt wird, kann der in radialer Richtung an einen Absatz anschlagende Kopf die Einstecktiefe des Stifts begrenzen beziehungsweise vorgeben. Dadurch kann die radiale Relativlage des Stifts innerhalb der Stiftverbindung definiert vorgegeben werden und beispielsweise sichergestellt werden, dass der Stift vollständig in der Zwischenwelle und in der Ausgangswelle versenkt aufgenommen ist. Eine Funktion des Kopfs des Stifts ist in diesem Fall die Begrenzung der Einstecktiefe des Stifts. Wenn der Stift von radial innen her eingesetzt wird, kann der Stift ebenfalls die Funktion erfüllen eine Einstecktiefe des Stifts vorzugeben. Zusätzlich kann der Kopf des Stifts unter Fliehkrafteinfluss an einem Absatz anschlagen und ein Lösen des Stifts unter Fliehkrafteinfluss blockieren. Eine Funktion des Kopfs des Stifts ist in diesem Fall alternativ oder zusätzlich zu der Begrenzung der Einstecktiefe des Stifts die Ausbildung einer Fliehkraftsicherung.

Vorzugsweise ist die Stiftverbindung zu einem verpressten Bereich zwischen der Zwischenwelle und der Ausgangswelle axial versetzt positioniert. Durch den axialen Versatz wird ein verpresster Flächenbereich zwischen der Zwischenwelle und der Ausgangswelle nicht durch die Bereitstellung einer Öffnung für den Stift der Stiftverbindung reduziert.

Besonders bevorzugt ist zwischen der Zwischenwelle und der Ausgangswelle ein Dichtelement zur Abdichtung einer Trennfuge zwischen der Zwischenwelle und der Ausgangswelle vorgesehen. Das Dichtelement kann im Bereich der Trennfuge vorgesehen sein. Es ist auch möglich, dass das Dichtelement zu er Trennfuge axial versetzt positioniert ist. Beispielsweise sind zwei zueinander axial versetzte Dichtelemente vorgesehenen, zwischen denen die Trennfuge positioniert ist, so dass abrasiver Verschleiß des Dichtelements an einer Kante der Trennfuge vermieden ist. Das Innenvolumen des Generators kann zu einem im Antriebsstrang vorgelagerten geschmierten Volumen, insbesondere innerhalb eines Getriebegehäuses eines Windgetriebes, mit Hilfe des mindestens einen Dichtelements abgedichtet sein. Ein Eintritt eines Schmiermittels, insbesondere Öl, in das Innere des Generators kann dadurch vermieden sein. Gleichzeitig kann zugelassen werden, dass ein Schmiermittel in einen Ringspalt zwischen der Zwischenwelle und der Ausgangswelle eintritt, wodurch eine geschmierte Lagerung der Ausgangswelle vereinfacht ist.

Insbesondere ist vorgesehen, dass die Zwischenwelle von einer Befestigungsstelle mit dem Rotorträger in Richtung des Drehmomentflusses in der Ausgangswelle in axialer Richtung absteht. Beginnend an der Befestigungsstelle mit dem Rotorträger verläuft die Zwischenwelle von dem Windrotor weg weiter in das Innenvolumen des Generators hinein. Dadurch wird bewusst eine besonders lange axiale Erstreckung der Ausgangswelle ermöglicht. Die Zwischenwelle kann zusammen mit der Ausgangswelle ein frei abstehendes Ende ausbilden, dass in der Art eines Schwingungstilgers schwingen kann und dadurch im Antriebsstrang auftretende Schwingungen reduzieren kann. Die Eigenfrequenz des abstehenden freien Endes kann durch die geometrische Ausgestaltung der Zwischenwelle bezüglich ihres Innendurchmesser, ihres Außendurchmessers und/oder oder ihrer radialen Wandstärke geeignet eingestellt werden. Hierbei ist möglich, dass die Befestigungsstelle mit dem Rotorträger, beispielsweise durch eine geeignete Zentrierung und/oder Lagerung, im Wesentlichen nicht schwingend ausgeführt ist und ein Luftspalt zwischen dem Rotor und dem Stator der elektrischen Maschine im Wesentlichen konstant bleibt.

Vorzugsweise ist die Zwischenwelle oder eine zu der Zwischenwelle separat ausgeführte und mit dem Rotorträger verbundene Lagerwelle über mindestens ein Rotorlager an einem feststehenden Gehäuseteil gelagert, wobei insbesondere das Rotorlager radial außen oder radial innen an dem Gehäuseteil abgestützt ist. Das Gehäuseteil kann insbesondere eine axiale Trennung des Innenvolumens des Generators zu einem im Antriebsstrang vorgelagerten Volumen, insbesondere innerhalb eines Getriebegehäuses eines Windgetriebes, bereitstellen. Hierbei kann ein einstückig mit der Zwischenwelle ausgestalteter Teil oder vorzugsweise die separat mit dem Rotorträger befestigte Lagerwelle an dem Gehäuseteil gelagert sein. Hierbei ist es möglich das Rotorlager, insbesondere zwei in einer Lageranordnung zusammengefasste Rotorlager, in einen nabenartigen Bereich des Gehäuseteils einzusetzen, wodurch das Rotorlager einen geringen Durchmesser aufweist und kostengünstig ist. Es ist aber auch möglich, dass das Rotorlager auf einen Ansatz des Gehäuseteils aufgesteckt ist, so dass eine Beeinträchtigung der Lagerung der Ausgangswelle vermieden und/oder eine einfachere Montage und Demontage ermöglicht ist.

Besonders bevorzugt ist vorgesehen, dass die Zwischenwelle einen Zwischenwellenflansch aufweist und der Zwischenwellenflansch über eine Flanschverbindung mit dem Rotorträger verbunden ist, wobei insbesondere die Zwischenwelle abgesehen von dem Zwischenwellenflansch radial innerhalb zu der Flanschverbindung ausgebildet ist. Dadurch bleibt die mit Hilfe des Zwischenwellenflanschs ausgebildete Flanschverbindung mit dem Rotorträger auch dann in axialer Richtung zugänglich, wenn die Zwischenwelle mit der Ausgangswelle drehmomentübertragend verbunden ist. Die Montage und Demontage ist dadurch vereinfacht.

Insbesondere ist vorgesehen, dass ein mindestens eine Planetenstufe aufweisendes Windgetriebe zur Wandlung des von dem Windrotor stammenden windkraftgenerierten Drehmoments vorgesehen ist und vorzugsweise die Ausgangswelle eine ausgangsseitige Sonnenwelle des Windgetriebes ist. Durch das Windgetriebe kann insbesondere eine Übersetzung ins Schnelle erfolgen, wodurch die Erzeugung elektrischer Energie in dem Generator vereinfacht und/oder verbessert ist. Die Ausgangswelle kann hierbei insbesondere gleichzeitig Teil der letzten Getriebestufe des Windgetriebes sein und die Getriebeausgangswelle des Windgetriebes ausbilden. Vorzugsweise ist die Ausgangswelle ausgehend von einem einstückigen oder separat ausgeführten Sonnenrad der letzten Getriebestufe des Windgetriebes bis zur Befestigung mit der Zwischenwelle einstückig ausgeführt. Eine Verbindung mehrerer kleinerer Teilwellen zur Ausbildung der Ausgangswelle ist vermieden, wodurch die Montage und Demontage vereinfacht ist.

Vorzugsweise ist bei einer gelösten Verbindung der Zwischenwelle mit dem Rotorträger die Ausgangswelle gemeinsam mit der Zwischenwelle generatorseitig in axialer Richtung herausziehbar. Wenn die Ausgangswelle eine Sonnenwelle eines Windgetriebes ist, kann auch das Sonnenrad der Sonnenwelle mit herausgezogen werden. Hierzu kann ein ausreichend großer Zwischenraum zwischen der Ausgangswelle und anderen Bauteilen, insbesondere dem feststehenden Gehäuseteil, vorgesehen sein. Besonders bevorzugt ist eine Lagerung der Ausgangswelle ausschließlich über eine für den Rotor vorgesehene Lagerung, insbesondere das an dem feststehenden Gehäuseteil abgestützte Rotorlager, gelagert. Die Montage und Demontage ist dadurch vereinfacht.

Besonders bevorzugt ist vorgesehen, dass der Rotor in radialer Richtung betrachtet die Zwischenwelle vollständig überdeckt oder die Zwischenwelle nur in Richtung des Drehmomentflusses in der Ausgangswelle in axialer Richtung übersteht. Die Zwischenwelle ist dadurch im Wesentlichen vollständig innerhalb des Innenvolumens des Generators vorgesehen. Ein Abstehen der Zwischenwelle zum Windrotor hin ist vermieden. Stattdessen kann die Ausbildung eines frei schwingenden Endes zusammen mit der Ausgangswelle erleichtert werden.

Ein weiterer Aspekt betrifft eine Baureihe von Antriebssträngen für eine Windkraftanlage mit einem ersten Antriebsstrang, der wie vorstehend beschrieben aus- und weitergebildet sein kann, und einem zweiten Antriebsstrang, der wie vorstehend beschrieben aus- und weitergebildet sein kann, wobei die Zwischenwelle des ersten Antriebsstrangs und die Zwischenwelle des zweiten Antriebsstrangs einen gleichen Außendurchmesser und/oder eine gleiche Außenkontur aber verschiedene Innendurchmesser aufweisen oder die Zwischenwelle des ersten Antriebsstrangs und die Zwischenwelle des zweiten Antriebsstrangs einen gleichen Innendurchmesser aber einen verschiedenen Außendurchmesser und/oder eine verschiedene Außenkontur aufweisen. Vorzugsweise weisen die Zwischenwelle des ersten Antriebsstrangs und die Zwischenwelle des zweiten Antriebsstrangs verschiedene Wandstärken in radialer Richtung auf. Durch das Verpressen beziehungsweise Verstiften der Zwischenwelle mit der Ausgangswelle ist nicht nur die Montagefreundlichkeit des Antriebsstrangs verbessert, sondern auch eine Anpassung der Geometrie der Zwischenwelle in radialer Richtung über einen größeren Bereich ermöglicht, um auftretende Schwingungen im Drehmomentfluss des Antriebsstrangs stärker zu reduzieren, so dass verschiedene Antriebsstränge mit im Betrieb unterschiedlichen Schwingungsverhalten lediglich durch eine geometrische Anpassung der Zwischenwelle schwingungstechnisch optimiert werden können.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Antriebsstrang, der wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Antriebsstrangs, insbesondere durch 3D-Druck, und/oder bei einer Verarbeitung durch eine Datenverarbeitungseinrichtung zur Durchführung einer technischen Simulation eine Simulation der Funktionsweise des Antriebsstrangs, durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und/oder eine Schwingungsanalyse durchzuführen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis und/oder einer Schwingungsanalyse einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische perspektivische Ansicht einer Windkraftanlage,
Fig. 2: eine schematische Schnittansicht eines Teils der Windkraftanlage aus Fig. 1 und
Fig. 3: eine schematische Detailansicht der Windkraftanlage aus Fig. 2.

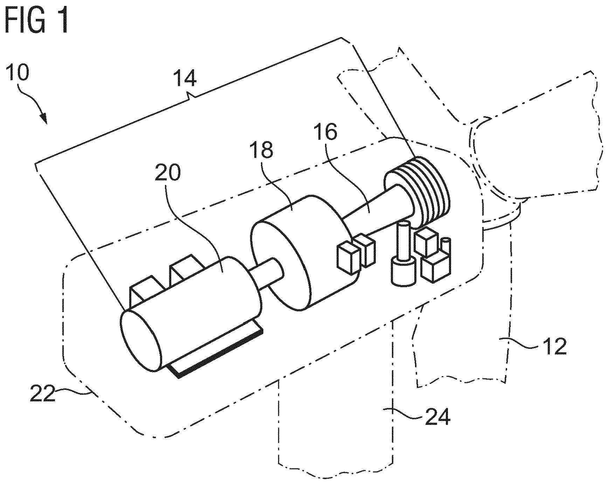

Die in Fig. 1 dargestellte industrielle Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Windrotorwelle 16 verbunden, die innerhalb des Antriebsstrangs 14 mit einem Windgetriebe 18 gekoppelt ist, um das über den Windrotor 12 und die Windrotorwelle 16 eingeleitete Drehmoment zu wandeln. Das in dem Windgetriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

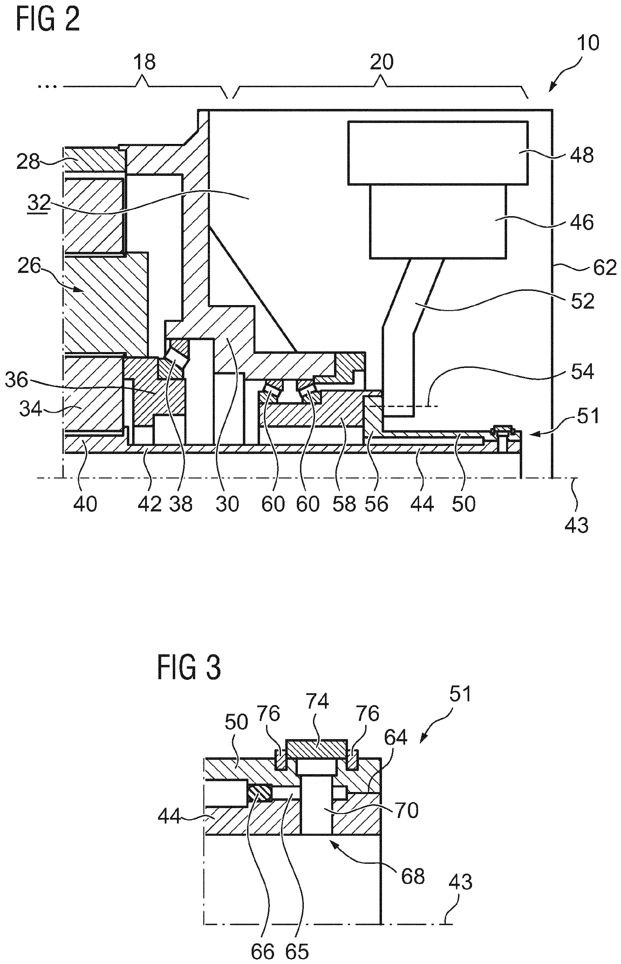

Wie in Fig. 2 dargestellt ist, kann das Windgetriebe 18 mindestens eine als Planetengetriebe ausgestaltete Getriebestufe 26 aufweisen. Die Getriebestufe 26 kann ein feststehendes Hohlrad 28 aufweisen, das mit einem feststehenden Gehäuseteil 30 bewegungsfest verbunden ist. Eine Außenseite des Hohlrad 28 kann eine äußere Begrenzung des Windgetriebes 18 ausbilden oder alternativ in einen zylindrischen Teil eines Getriebegehäuses eingesteckt sein. Das Gehäuseteil 30 kann eine axiale Trennung der Getriebestufe 26 von einem Innenvolumen 32 eines durch die elektrische Maschine 20 ausgebildeten Generators 20 ausbilden. Mit dem Hohlrad 28 der Getriebestufe 26 kann mindestens ein Planetenrad 34 kämmen, das an einem Planetenträger 36 der Getriebestufe 26 gelagert ist. Der Planetenträger 36 wiederum kann über ein Planetenträgerlager 38 an dem feststehenden Gehäuseteil 30 gelagert sein. Das Planetenrad 34 kämmt auch mit einem Sonnenrad 40, das als separates Bauteil mit einer Sonnenwelle 42 drehfest verbunden ist oder einstückig mit der Sonnenwelle 42 als eine Verzahnung der Sonnenwelle 42 ausgebildet ist. Die um eine Hauptdrehachse 43 des Windgetriebes 18 drehbare Sonnenwelle 42 ragt in axialer Richtung in Richtung des übertragenen von dem Windrotor 12 stammenden windkraftgenerierten Drehmoments, also generatorseitig, aus dem feststehenden Gehäuseteil 30 und somit auch aus dem Windgetriebe 18 heraus in das Innenvolumen 32 des Generators 20 hinein ab und bildet damit definitionsgemäß eine Ausgangswelle 44 aus, über die das windkraftgenerierten Drehmoment in den Generator 20 eingeleitet wird.

Die Ausgangswelle 44 kann in axialer Richtung soweit in das Innenvolumen 32 des Generators 20 hineinragen, dass die Ausgangswelle 44 bis zu einem generatorseitigen Ende eines Rotors 46 und/oder eines mit dem Rotor 46 zusammenwirkenden Stator 48 des Generators 20 reicht oder sogar darüber hinaus absteht. In einem axialen Endbereich an dem abstehenden Ende der Ausgangswelle 44 ist eine als Hohlwelle ausgestaltete Zwischenwelle 50 drehmomentübertragend befestigt, wobei die zur drehfesten Verbindung 51 der Zwischenwelle 50 mit der Ausgangswelle 44 verwendete Befestigungstechnik einen Innendurchmesser der Zwischenwelle 50 und einen Außendurchmesser der Zwischenwelle 50 nicht substantiell limitiert, so dass die Geometrie der Zwischenwelle 50 bezüglich ihres Innendurchmesser, ihres Außendurchmessers und ihrer radialen Wandstärke in einem großen Umfang zu dem Zweck dimensioniert werden kann, in dem aus dem Gehäuseteil 30 abstehenden freien Ende der durch die Ausgangswelle 44 und die Zwischenwelle 50 ausgebildete Baueinheit eine Eigenfrequenz vorzusehen, die bei den zu erwartenden Schwingungen eine signifikante Schwingungsreduktion erreichen kann. Die Zwischenwelle 50 kann von der Befestigungsstelle der drehfesten Verbindung 51 mit der Ausgangswelle 44 auf das feststehende Gehäuseteil 30 zu, also getriebeseitig, zurückverlaufen und mit einem Rotorträger 52, beispielsweise über eine Flanschverbindung 54, drehfest verbunden werden, wobei der Rotorträger 52 ebenfalls fest mit dem Rotor 46 verbunden ist. Die Zwischenwelle 50 weist an ihrem getriebeseitigen Ende einen nach radial außen abstehenden Zwischenwellenflansch 56 auf, der an einer getriebeseitigen Axialseite oder an einer generatorseitigen Axialseite des Rotorträger 52 angesetzt sein kann, um die Flanschverbindung 54 herbeizuführen. Insbesondere ist der Zwischenwellenflansch 56 die einzige in radialer Richtung von dem übrigen Außendurchmesse der Zwischenwelle 50 abstehende Bereich der Zwischenwelle 50. Abgesehen von dem axialen Bereich, in dem der Zwischenwellenflansch 56 vorgesehen ist, kann die Zwischenwelle 50 einen konstanten Außendurchmesser aufweisen.

In dem dargestellten Ausführungsbeispiel ist eine separat zu der Zwischenwelle 50 ausgebildete Lagerwelle 58 vorgesehen, die drehfest mit dem Rotorträger 52 befestigt ist und über ein, beispielsweise als zweireihiges Schrägkugellager ausgestaltetes, Rotorlager 60 an dem feststehenden Gehäuseteil 30 gelagert ist, um den Rotor 46 koaxial zum Stator 48 lagern zu können. Im dargestellten Ausführungsbeispiel ist das Rotorlager 60 an einer nach radial innen weisenden Innenseite des Gehäuseteils 30 abgestützt. Alternativ kann das Rotorlager 60 auch an einer nach radial außen weisenden Außenseite des Gehäuseteils 30 vorgesehen sein. Vorzugsweise ist das Rotorlager 60 das einzige Lager zur Lagerung des Rotors 46, so dass ein generatorseitiges Lager in einem mit dem Gehäuseteil 30 verbundenen Generatorgehäuse 62 des Generators 20 eingespart werden kann. Insbesondere ist die Lagerwelle 58 über die identische, bereits zur Befestigung der Zwischenwelle 50 mit dem Rotorträger 52 verwendete, Flanschverbindung 54 mit dem Rotorträger 52 verbunden.

Die in Fig. 3 im Detail dargestellte drehmomentübertragende Verbindung 51 zwischen der Ausgangswelle 44 und der Zwischenwelle 50 kann durch ein Verpressen der Ausgangswelle 44 mit der Zwischenwelle 50 erzeugt werden, so dass sich zwischen Ausgangswelle 44 und der Zwischenwelle 50 ein Pressverbund 64, insbesondere ein Querpressverband oder Längspressverband, ergibt. Eine sich an der Befestigungsstelle der drehmomentübertragende Verbindung 51 zwischen der Ausgangswelle 44 und der Zwischenwelle 50 ergebene Trennfuge kann mit Hilfe eines, beispielsweise als O-Ring ausgestaltetes, Dichtelements 66 abgedichtet werden.

Zusätzlich oder alternativ zu dem Pressverbund 64 kann die drehmomentübertragende Verbindung 51 zwischen der Ausgangswelle 44 und der Zwischenwelle 50 durch eine Stiftverbindung 68 ausgebildet sein. Wenn die Stiftverbindung 68 zusätzlich zu dem Pressverbund 64 vorgesehen ist, kann die Stiftverbindung 68, insbesondere getriebeseitig, zu dem Pressverbund 64 axial versetzt positioniert sein. Die Stiftverbindung 68 weist mindestens einen, vorzugsweise radial verlaufenden, Stift 70 auf, wobei insbesondere mehrere in Umfangsrichtung gleichmäßig verteilte Stifte 70 vorgesehen sind. Der jeweilige Stift 70 kann in korrespondierende Öffnungen in der Zwischenwelle 50 und in der Ausgangswelle 44 mit Spiel eingesetzt oder ohne signifikantes Spiel eingepresst sein. Vorzugsweise weist der Stift 70 einen Kopf 72 auf, der über ein Anschlagen eine Einstecktiefe des Stifts 70 begrenzt und sicherstellt, dass der Stift 70 vollständig in der Zwischenwelle 50 und in der Ausgangswelle versenkt aufgenommen sein kann und nicht nach radial außen und/oder radial innen absteht. Erforderlichenfalls kann der Stift 70 in radialer Richtung mit Hilfe einer axial aufgesteckten oder aufgepressten Rückhaltehülse 74 gegen ein fliehkraftgetriebenes Lösen gesichert werden. Vorzugsweise ist nur genau eine Rückhaltehülse 74 für sämtliche vorgesehenen Stifte 70 der Stiftverbindung 68 vorgesehen. Gegebenenfalls kann die Rückhaltehülse 74 in axialer Richtung gesichert sein, indem beispielsweise ein Wellenabsatz und/oder mindestens ein in der Zwischenwelle 50 eingesetzter Sicherungsring 76 vorgesehen ist.

## Patentansprüche

1. Antriebsstrang (14) für eine Windkraftanlage (10), mit
einer Ausgangswelle (44) zur Übertragung eines von einem Windrotor (12) stammenden windkraftgenerierten Drehmoments,
einem Rotor (46) zur Erzeugung elektrischer Energie aus dem windkraftgenerierten Drehmoment bei einem Zusammenwirken mit einem Stator (48) eines Generators (20),
einem von dem Rotor (46) nach radial innen abstehenden Rotorträger (52) und
einer mit dem Rotorträger (52) und der Ausgangswelle (44) drehfest verbundenen Zwischenwelle (50),
**dadurch gekennzeichnet, dass**
die Zwischenwelle (50) mit der Ausgangswelle (44) verpresst ist.

2. Antriebsstrang (14) nach Anspruch 1, wobei die Zwischenwelle (50) über einen radial geführten Passsitz, insbesondere eine Schrumpfverbindung und/oder einen zylindrischen oder kegeligen Pressverband, mit der Ausgangswelle (44) verpresst ist.

3. Antriebsstrang (14) nach Anspruch 1 oder 2, wobei die Zwischenwelle (50) mit der Ausgangswelle (44) über eine radial ausgerichtete Stiftverbindung (68) befestigt ist, wobei mindestens ein Stift (70) der Stiftverbindung (68) in radialer Richtung vollständig in der Zwischenwelle (50) und der Ausgangswelle (44) versenkt aufgenommen ist.

4. Antriebsstrang (14) für eine Windkraftanlage (10), mit
einer Ausgangswelle (44) zur Übertragung eines von einem Windrotor (12) stammenden windkraftgenerierten Drehmoments,
einem Rotor (46) zur Erzeugung elektrischer Energie aus dem windkraftgenerierten Drehmoment bei einem Zusammenwirken mit einem Stator (48) eines Generators (20),
einem von dem Rotor (46) nach radial innen abstehenden Rotorträger (52) und
einer mit dem Rotorträger (52) und der Ausgangswelle (44) drehfest verbundenen Zwischenwelle (50),
**dadurch gekennzeichnet, dass**
die Zwischenwelle (50) mit der Ausgangswelle (44) über eine radial ausgerichtete Stiftverbindung (68) befestigt ist, wobei mindestens ein Stift (70) der Stiftverbindung (68) in radialer Richtung vollständig in der Zwischenwelle (50) und der Ausgangswelle (44) versenkt aufgenommen ist.

5. Antriebsstrang (14) nach Anspruch 3 oder 4, wobei die Stiftverbindung (68) radial außen und/oder radial innen von einer aufgesteckten und axial gesicherten Rückhaltehülse (74) radial gesichert ist.

6. Antriebsstrang (14) nach einem der Ansprüche 3 bis 5, wobei die Stiftverbindung (68) einen Stift (70) mit einem in radialer Richtung anschlagbaren Kopf (72) aufweist.

7. Antriebsstrang (14) nach einem der Ansprüche 1 bis 6, wobei zwischen der Zwischenwelle (50) und der Ausgangswelle (44) ein Dichtelement (66) zur Abdichtung einer Trennfuge (65) zwischen der Zwischenwelle (50) und der Ausgangswelle (44) vorgesehen ist.

8. Antriebsstrang (14) nach einem der Ansprüche 1 bis 7, wobei die Zwischenwelle (50) von einer Befestigungsstelle mit dem Rotorträger (52) in Richtung des Drehmomentflusses in der Ausgangswelle (44) in axialer Richtung absteht.

9. Antriebsstrang (14) nach einem der Ansprüche 1 bis 8, wobei die Zwischenwelle (50) oder eine zu der Zwischenwelle (50) separat ausgeführte und mit dem Rotorträger (52) verbundene Lagerwelle (58) über mindestens ein Rotorlager (60) an einem feststehenden Gehäuseteil (30) gelagert ist, wobei das Rotorlager (60) radial außen oder radial innen an dem Gehäuseteil (30) abgestützt ist.

10. Antriebsstrang (14) nach einem der Ansprüche 1 bis 9, wobei die Zwischenwelle (50) einen Zwischenwellenflansch (56) aufweist und der Zwischenwellenflansch (56) über eine Flanschverbindung (54) mit dem Rotorträger (52) verbunden ist, wobei die Zwischenwelle (50) abgesehen von dem Zwischenwellenflansch (56) radial innerhalb zu der Flanschverbindung (54) ausgebildet ist.

11. Antriebsstrang (14) nach einem der Ansprüche 1 bis 10, wobei ein mindestens eine Planetenstufe aufweisendes Windgetriebe (18) zur Wandlung des von dem Windrotor (12) stammenden windkraftgenerierten Drehmoments vorgesehen ist und die Ausgangswelle (44) eine ausgangsseitige Sonnenwelle (42) des Windgetriebes 18 ist.

12. Antriebsstrang (14) nach einem der Ansprüche 1 bis 10, wobei bei einer gelösten Verbindung der Zwischenwelle (50) mit dem Rotorträger (52) die Ausgangswelle (44) gemeinsam mit der Zwischenwelle (50) generatorseitig in axialer Richtung herausziehbar ist.

13. Antriebsstrang (14) nach einem der Ansprüche 1 bis 10, wobei der Rotor (46) in radialer Richtung betrachtet die Zwischenwelle (50) vollständig überdeckt oder die Zwischenwelle (50) nur in Richtung des Drehmomentflusses in der Ausgangswelle (44) in axialer Richtung übersteht.

14. Baureihe von Antriebssträngen (14) für eine Windkraftanlage (10) mit einem ersten Antriebsstrang nach einem der Ansprüche 1 bis 13 und einem zweiten Antriebsstrang nach einem der Ansprüche 1 bis 13, wobei die Zwischenwelle (50) des ersten Antriebsstrangs und die Zwischenwelle (50) des zweiten Antriebsstrangs einen gleichen Außendurchmesser und/oder eine gleiche Außenkontur aber verschiedene Innendurchmesser oder die Zwischenwelle (50) des ersten Antriebsstrangs und die Zwischenwelle (50) des zweiten Antriebsstrangs einen gleichen Innendurchmesser aber einen verschiedenen Außendurchmesser und/oder eine verschiedene Außenkontur aufweisen.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Antriebsstrang (14) nach einem der Ansprüche 1 bis 13 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile des Antriebsstrangs (14), insbesondere durch 3D-Druck, durchzuführen
und/oder
bei einer Verarbeitung durch eine Datenverarbeitungseinrichtung zur Durchführung einer technischen Simulation eine Simulation der Funktionsweise des Antriebsstrangs (14) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und/oder eine Schwingungsanalyse durchzuführen.
